# EUROPEAN PATENT APPLICATION

(11) **EP 4 451 288 A1**
(43) Date of publication of application: **23.10.2024**
(21) Application number: 21968307.5
(22) Date of filing: 15.12.2021
(51) Int. Cl.: G21C 3/64, C04B 35/565

(54) **HIGH-TEMPERATURE DENSE COMPOSITE NUCLEAR FUEL MATERIAL AND METHOD FOR PRODUCING SAME**

(30) Priority: 13.12.2021 RU 2021136719
(71) Applicant: Joint Stock Company "Rosenergoatom", Moscow 109507 (RU); "Luch Research and Production Association, Research and Development Institute, Jointstock Company ("Luch JSC"), Moskovskaya oblast, g. Podol'sk 142103 (RU); Science and Innovations - Nuclear Industry Scientific Development, Private Enterprise, Moscow, 119017 (RU)
(72) Inventor: BAKHIN, Andrey Nikolaevich, Podol'sk, 142116 (RU); REPNIKOV, Vladimir Mikhaylovich, Podol'sk, 142100 (RU); VISHNEVSKIY, Vjacheslav Yur'evich, Podol'sk, 142116 (RU); KOTOV, Alexander Yur'evich, Moscow, 127521 (RU); KISELEV, Dmitry Sergeevich, Podol'sk, 142115 (RU); BESPECHALOV, Boris Nikolaevich, Sosnoviy bor, 142108 (RU)
(74) Representative: Osmans, Voldemars
(86) International application number: PCT/RU2021/000579
(87) International publication number: WO 2023/113638

(57) **Abstract**

The group of inventions relates to a nuclear fuel material and represents a high-temperature dense composite nuclear fuel material and a method of its production. The high-temperature dense composite nuclear fuel material comprises a radiation inert ceramic matrix in which nuclear fuel particles are distributed. The matrix is made of a powder of a silicon carbide based material. The nuclear fuel particles are particles of an oxygen-free nuclear fuel. The method of producing the high-temperature dense composite nuclear fuel material includes preparation of a mixture of nuclear fuel particles and a powder of the radiation inert ceramic matrix, molding of the mixture by pressing, and sintering of the molded mixture. The molded mixture is sintered by hot pressing. The group of inventions makes it possible to produce the high-temperature dense composite nuclear fuel material which, after annealing in vacuum at 0.63Tₘₑₗₜ for 10 hours, exhibits a loss in mass of not more than 2%.

## Description

### TECHNICAL FIELD

The group of inventions relates to a nuclear fuel material characterized, in particular, by high resistance to corrosion cracking and structural and phase stability under high-temperature irradiation and increased ability to retain volatile fission products, as well as to a method for producing the said high-temperature dense composite nuclear fuel material.

Ensuring thermal strength of nuclear fuel under irradiation conditions is one of the key tasks in the design and operation of nuclear facilities. Swelling of nuclear fuel under irradiation, release of fission products, oxygen, and other solid and gaseous products of chemical interaction lead to the appearance of local stresses and change of structural and phase condition of a fuel element in normal and emergency modes of operation, which leads to degradation of mechanical properties and, as a consequence, to cracking of nuclear fuel and rupture of the fuel element cladding.

### BACKGROUND ART

There is a known method of producing a composite nuclear fuel material (patent GB 1116663, IPC C01G43/025, C04B35/51, G21C 3/62, publ. 12.06.1968) containing a radiation inert ceramic matrix in which nuclear fuel particles are distributed, comprising preparation of a mixture of particles of a nuclear fuel precursor substance and a powder of a material intended for making the radiation inert ceramic matrix, molding of the mixture by pressing, and sintering of the molded mixture in a reducing atmosphere. However, the composite material produced by this method does not solve the problem of nuclear fuel swelling under irradiation and release of volatile fission products leading to local stresses inside the material.

There is a known method of producing a fuel composition for a nuclear reactor (patent RU 2295165 C1, IPC (2006.01) G21C 3/02, G21C 3/30, G21C 21/02 , publ. 10.03.2007), comprising pouring a finely dispersed fuel into a cladding of a given size and shape, additionally filling the cladding with a substance forming a solid matrix at a temperature equal to or higher than the melting temperature of the fuel, heating the cladding with the finely dispersed fuel and the substance forming the solid matrix to a temperature equal to or higher than the melting temperature of the fuel, and cooling. The invention demonstrates the performance and integrity of this fuel composition in cyclic temperature changes from 20 to 1200°C (100 cycles). However, the use of metallic nuclear fuel and pre-ceramic polymers in the production of the fuel composition limits its performance at higher temperatures.

The closest in technical essence to the claimed high-temperature dense composite nuclear fuel material and the method of its production is a composite nuclear fuel material and a method of its production (patent RU 2175791 C2, IPC (2000. 01) G21C 3/64, C04B 35/51, publ. 10.11.2001), consisting in preparation of a mixture of nuclear fuel precursor substance particles and a material powder, molding of the mixture by pressing, and sintering of the molded mixture in a reducing atmosphere. The material contains a radiation inert ceramic matrix in which nuclear fuel particles are distributed. The size of a gap between the matrix and the particles is 1-10 µm. The thermal expansion coefficient of the matrix is less than the thermal expansion coefficient of the nuclear fuel particles. The matrix can be made of spinel, magnesium oxide, or yttrium oxide. The nuclear fuel particles are particles of UO₂ or a mixture of UO₂-based oxide. However, high-temperature irradiation of the composite material produced by this method will be accompanied by active oxygen corrosion inside the material and accumulation of internal stresses associated with changes in the structural and phase state of the matrix material during operation.

None of the materials mentioned in the analogs simultaneously solves the problems related to nuclear fuel swelling and preservation of the structural-phase state of a fuel element under conditions of high-temperature irradiation.

### SUMMARY OF INVENTION

This invention aims at producing a new fuel material, which solves the above-mentioned problems, and creating a method of preparing such nuclear fuel. This is achieved by using a heat-resistant oxygen-free fuel which is superior to traditional dioxide fuel in almost all thermophysical parameters, in combination with a dense silicon carbide matrix which has high heat resistance, high dissociation temperature, high temperature resistance in various media, does not swell and is little affected by irradiation having low thermal neutron capture cross-section, which is confirmed by half a century of experience in using it as a power layer in the design of coated fuel particles of high-temperature gas-cooled reactors. Low chemical activity and high-temperature resistance of the dense silicon carbide material provide gas tightness and stable heat exchange of the fuel element with the coolant even under conditions of high-temperature operation up to 0.63Tₘₑₗₜ.

The technical result aimed at by the invention is producing a high-temperature dense composite nuclear fuel material with a mass loss not exceeding 2% after annealing in vacuum at 0.63Tₘₑₗₜ for 10 hours.

In order to achieve the specified result, a high-temperature dense composite nuclear fuel material is proposed containing a radiation inert ceramic matrix in which nuclear fuel particles are distributed, wherein the matrix is made of a powder of a silicon carbide based material, and the nuclear fuel particles are oxygen-free nuclear fuel particles.

A powder of a silicon carbide based material of submicron dispersity is used.

A powder of a Si-C-Al based carborundum material is used as the powder of the silicon carbide based material.

The distributed particles of the oxygen-free nuclear fuel are nitride or carbide, or uranium-zirconium carbonitride fuel particles.

A ratio and dimensions of the nuclear fuel particles distributed in the ceramic matrix are determined by the neutronics of nuclear installation cores.

The high-temperature dense composite nuclear fuel material is additionally coated with a layer of a dense carbide-silicon coating that retains fission products.

A thickness of the applied layer of the dense carbide-silicon coating is 50-100 µm.

A form and dimensions of the dense composite nuclear fuel material are determined by the neutronics of nuclear installation cores.

A method of producing a high-temperature dense composite nuclear fuel material is proposed; it includes preparation of a mixture of nuclear fuel particles and a powder of a radiation inert ceramic matrix, molding of the mixture by pressing, and sintering of the molded mixture, wherein the molded mixture is sintered by hot pressing; the matrix is made of a powder of a silicon carbide based material, and the nuclear fuel particles are particles of an oxygen-free nuclear fuel.

The molded mixture is sintered by hot pressing at a temperature of (0.70-0.85)Tₘₑₗₜ and a pressure of at least 100 MPa.

The high-temperature dense composite nuclear fuel material is coated with a layer of a dense carbide-silicon coating that retains fission products.

The use of the oxygen-free nuclear fuel in the composite material in combination with the dense carbide-silicon matrix will prevent the occurrence of oxygen corrosion inside the material, reduce the rate of swelling of the nuclear fuel, and, consequently, preserve the thermophysical properties and significantly reduce the internal stresses associated with changes in the structural and phase state of the matrix material during operation.

### BRIEF DESCRIPTION OF DRAWINGS

Fig. 1 shows the material structure after thermal testing of the produced high-temperature dense composite nuclear fuel material.
Fig. 2 shows the material structure after thermal testing of the produced high-temperature dense composite nuclear fuel material.
Fig. 3 shows the material structure after thermal testing of the produced high-temperature dense composite nuclear fuel material.

### DESCRIPTION OF EMBODIMENTS

### Example 1:

The high-temperature dense composite nuclear fuel material was produced by mixing uranium-zirconium carbonitride fuel particles in the amount of 2 g and a carbide-silicon material powder in the amount of 25 g, intended for the production of radiation-inert ceramic matrix; the mixture was molded by pressing, and the molded mixture was sintered in vacuum by hot pressing at a temperature of 0.80Tₘₑₗₜ and pressure of 400 MPa.

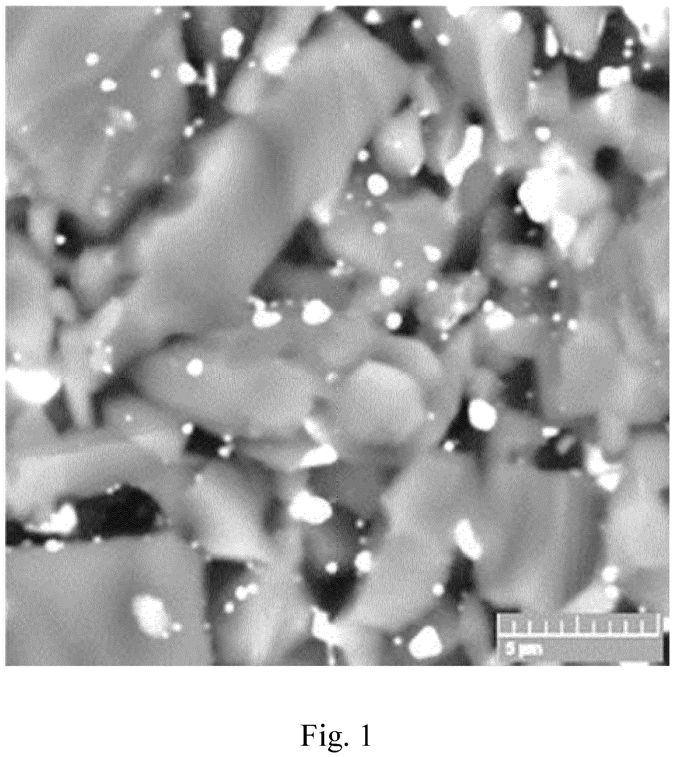

Fig. 1 presents the structure of the material after thermal testing of the produced high-temperature dense composite nuclear fuel material, showing that the mass loss of the material after annealing in vacuum at 0.63Tₘₑₗₜ for 10 hours was 0.3%.

### Example 2:

The high-temperature dense composite nuclear fuel material was produced by mixing nitride nuclear fuel particles in the amount of 3 g and a carbide-silicon material powder in the amount of 50 g, intended for the production of radiation-inert ceramic matrix; the mixture was molded by pressing, and the molded mixture was sintered in vacuum by hot pressing at a temperature of 0.75Tₘₑₗₜ and pressure of 300 MPa.

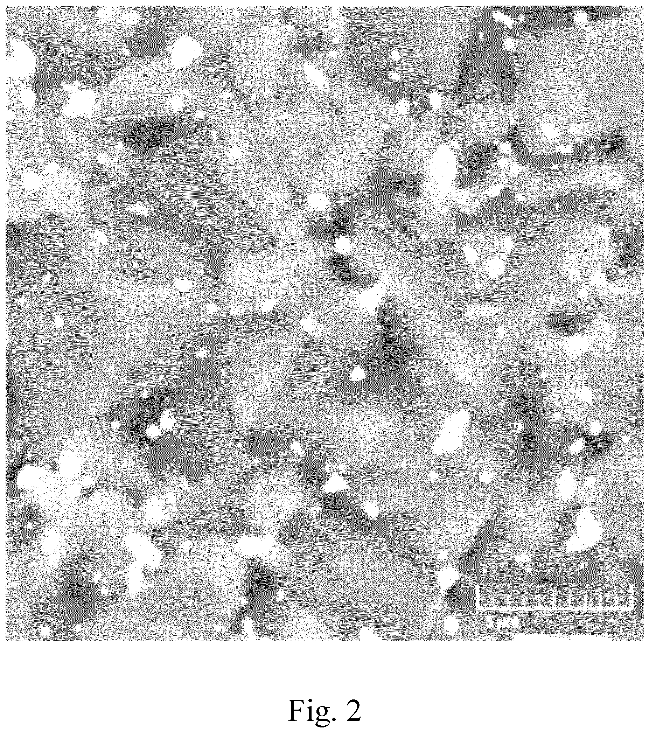

Fig. 2 presents the structure of the material after thermal testing of the produced high-temperature dense composite nuclear fuel material, showing that the mass loss of the material after annealing in vacuum at 0.63Tₘₑₗₜ for 10 hours was 1.7%.

### Example 3:

The high-temperature dense composite nuclear fuel material was produced by mixing carbide nuclear fuel in the amount of 1.5 g and a carbide-silicon material powder in the amount of 20 g, intended for the production of radiation-inert ceramic matrix; the mixture was molded by pressing, and the molded mixture was sintered in vacuum by hot pressing at a temperature of 0.85Tₘₑₗₜ and pressure of 500 MPa.

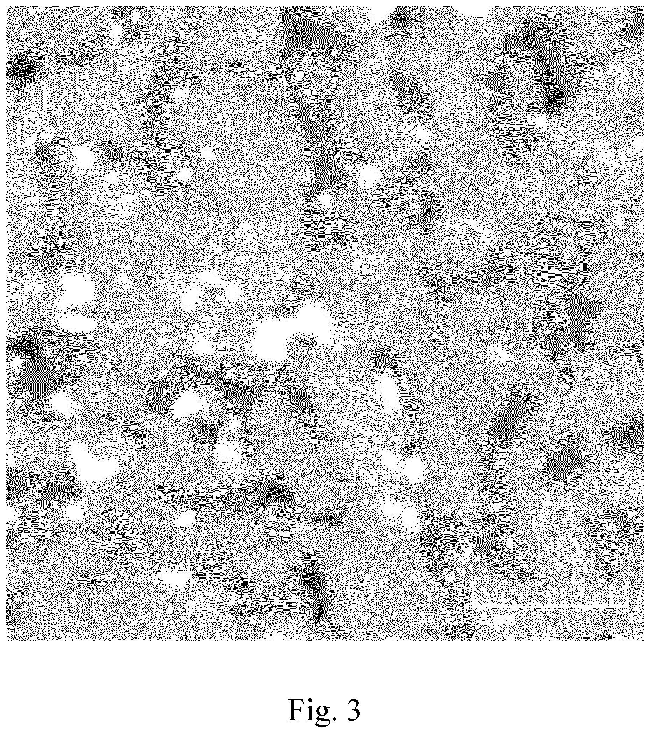

Fig. 3 presents the structure of the material after thermal testing of the produced high-temperature dense composite nuclear fuel material, showing that the mass loss of the material after annealing in vacuum at 0.63Tₘₑₗₜ for 10 hours was 1.1%.

Therefore, a high-temperature dense composite nuclear fuel material is proposed containing a radiation inert ceramic matrix in which nuclear fuel particles are distributed, wherein the matrix is made of a powder of a silicon carbide based material, and the nuclear fuel particles are oxygen-free nuclear fuel particles.

Thermal testing of the produced high-temperature dense composite nuclear fuel material demonstrated that the mass loss of the material after annealing in vacuum at 0.63Tₘₑₗₜ for 10 hours did not exceed 2%. The high-temperature resistance and structural and phase stability of this material was demonstrated at test temperatures one and a half times higher than the temperatures of similar experiments in the prototype and analogs, in which the interaction of the ceramic matrix with nuclear fuel particles was observed.

## Claims

1. A high-temperature dense composite nuclear fuel material, containing a radiation inert ceramic matrix in which nuclear fuel particles are distributed, **characterized in that** the matrix is made of a powder of a silicon carbide based material, and the nuclear fuel particles are oxygen-free nuclear fuel particles.

2. The material according to claim 1, **characterized in that** the powder of the silicon carbide based material has submicron dispersity.

3. The material according to claim 1, **characterized in that** a powder of a Si-C-Al based carborundum material is used as the powder of the silicon carbide based material.

4. The material according to claim 1, **characterized in that** the distributed particles of the oxygen-free nuclear fuel are nitride or carbide, or uranium-zirconium carbonitride fuel particles.

5. The material according to claim 1, **characterized in that** a ratio and dimensions of the nuclear fuel particles distributed in the ceramic matrix are determined by the neutronics of nuclear installation cores.

6. The material according to claim 1, **characterized in that** it is additionally coated with a layer of a dense carbide-silicon coating.

7. The material according to claim 6, **characterized in that** a thickness of the applied layer of the dense carbide-silicon coating is 50-100 µm.

8. The material according to claim 1, **characterized in that** a form and dimensions of the dense composite nuclear fuel material are determined by the neutronics of nuclear installation cores.

9. A method of producing a high-temperature dense composite nuclear fuel material, including preparation of a mixture of nuclear fuel particles and a powder of a radiation inert ceramic matrix, molding of the mixture by pressing, and sintering of the molded mixture, wherein the molded mixture is sintered by hot pressing; the matrix is made of a powder of a silicon carbide based material, and the nuclear fuel particles are particles of an oxygen-free nuclear fuel.

10. The method according to claim 9, **characterized in that** the molded mixture is sintered by hot pressing at a temperature of (0.70-0.85)Tₘₑₗₜ and a pressure of at least 100 MPa.

11. The method according to claim 9, **characterized in that** said material is coated with a layer of a dense carbide-silicon coating.
